# EUROPEAN PATENT APPLICATION

(11) **EP 4 517 893 A1**
(43) Date of publication of application: **05.03.2025**
(21) Application number: 23796380.6
(22) Date of filing: 25.04.2023
(51) Int. Cl.: H01M 10/04, H01M 4/02, H01M 4/13, H01M 10/0587

(54) **SECONDARY BATTERY**

(30) Priority: 28.04.2022 JP 2022075451
(71) Applicant: Panasonic Energy Co., Ltd., Osaka 570-8511 (JP)
(72) Inventor: TAKIJIRI, Manabu, Kadoma-shi, Osaka 571-0057 (JP); MIZAWA, Atsushi, Kadoma-shi, Osaka 571-0057 (JP); MIZUKOSHI, Fumikazu, Kadoma-shi, Osaka 571-0057 (JP)
(74) Representative: Novagraaf International SA
(86) International application number: PCT/JP2023/016305
(87) International publication number: WO 2023/210640

(57) **Abstract**

In this secondary battery, which is one example of an embodiment, a tape for fixing a winding-terminus end is adhered to an outer circumferential surface of a winding-type electrode body. The mass of a positive electrode active material per unit area of a first region, which is part of a winding outer surface at the outermost periphery of a positive electrode (11) and which overlaps with at least the radial direction of the tape and the electrode body, is less than the mass of a positive electrode active material per unit area of a second region which is part of the winding outer surface which excludes the first region and in which a positive electrode mixture layer is present. In the first region, for example, an exposed portion (32) is formed at which the surface of a positive electrode core (30) is exposed.

## Description

### TECHNICAL FIELD

The present disclosure relates to a secondary battery, and more specifically relates to a secondary battery comprising a wound electrode assembly.

### BACKGROUND ART

Secondary batteries including a wound electrode assembly in which a positive electrode and a negative electrode are spirally wound via a separator have been conventionally used widely (see Patent Literature 1 and 2, for example). To the wound electrode assembly is typically attached a winding-stop tape for retaining the wound structure. For example, Patent Literature 1 discloses an electrode assembly in which a winding-stop tape that fixes a winding-finish end of a negative electrode is attached to both ends in an axial direction of an outer circumferential surface.

### CITATION LIST

### PATENT LITERATURE

PATENT LITERATURE 1: International Publication No. 2018/168628
PATENT LITERATURE 2: Japanese Unexamined Patent Application Publication No. 2002-110134

### SUMMARY

In the secondary battery such as a lithium-ion battery, the wound electrode assembly expands and contracts with charge and discharge. However, when the winding-stop tape is attached to the outer circumferential surface of the electrode assembly, stress due to the expansion of the electrode assembly may concentrate at an edge of the tape to damage the electrode assembly. As a result of investigation by the present inventors on the wound electrode assembly in which the negative electrode constitutes the outer circumferential surface, wrinkles of the negative electrode were observed on the edge of the winding-stop tape attached to the outer circumferential surface.

A secondary battery according to the present disclosure is a secondary battery comprising an electrode assembly including a positive electrode, a negative electrode, and a separator, in which the positive electrode and the negative electrode are wound via the separator, wherein a tape that fixes a winding-finish end is attached to an outer circumferential surface of the electrode assembly, the positive electrode has a positive electrode core and a positive electrode mixture layer including a positive electrode active material and formed on the positive electrode core, and a mass of the positive electrode active material per unit area of a first region overlapped with at least the tape in a radial direction of the electrode assembly in an outer winding surface of an outermost circumference of the positive electrode is smaller than a mass of the positive electrode active material per unit area of a second region where the positive electrode active material layer is present, the second region excluding the first region in the outer winding surface.

According to the secondary battery of the present disclosure, stress to concentrate at the edge of the winding-stop tape may be relaxed to inhibit damage of the electrode assembly.

### BRIEF DESCRIPTION OF DRAWINGS

FIG. 1 is a sectional view of a secondary battery of an example of an embodiment.
FIG. 2 is a perspective view of an electrode assembly of an example of an embodiment.
FIG. 3 is a front view of a positive electrode of an example of an embodiment.

### DESCRIPTION OF EMBODIMENTS

As noted above, in the wound electrode assembly in which the winding-stop tape is attached to the outer circumferential surface, stress tends to concentrate at the edge of the tape when the volume changes with charge and discharge, and wrinkles may be generated on the electrode constituting the outer circumferential surface, for example. The present inventors have made intensive investigation to inhibit the damage of the electrode assembly caused by the winding-stop tape, and consequently found that the damage of the electrode assembly is highly inhibited by reducing a mass of a positive electrode active material per unit area of the positive electrode in a first region overlapped with at least the tape in a radial direction of the electrode assembly in the outer winding surface of the outermost circumference of the positive electrode. In this case, stress to concentrate at the edge of the winding-stop tape is considered to be effectively relaxed.

In the first region overlapped with at least the tape in the radial direction of the electrode assembly in the outer circumferential surface of the positive electrode, an exposed portion where a surface of the positive electrode core is exposed is preferably provided. In this case, the effect of inhibiting the damage of the positive electrode assembly becomes more remarkable. When the winding-stop tape is attached to both ends in an axial direction of the electrode assembly, on the outer winding surface of the outermost circumference of the positive electrode, an exposed potion is preferably provided so as to sandwich the positive electrode mixture layer in the radial direction of the electrode assembly. In other words, the exposed portion is set to have a necessarily minimum area by providing the positive electrode mixture layer in a region not overlapped with the tape in the radial direction even in the outer winding surface of the outermost circumference of the positive electrode. In this case, the damage of the electrode assembly may be efficiently inhibited while keeping high capacity.

Hereinafter, an example of an embodiment of the secondary battery according to the present disclosure will be described in detail with reference to the drawings. The embodiments described hereinafter are merely an example, and the present disclosure is not limited to the following embodiments. The present disclosure includes embodiments composed of selectively combining constituents of the embodiment described hereinafter.

Hereinafter, a cylindrical battery in which a wound electrode assembly 14 is housed in a bottomed cylindrical exterior housing can 16 will be exemplified as the secondary battery, but the exterior of the battery is not limited to the cylindrical exterior housing can. The secondary battery according to the present disclosure may be, for example, a rectangular battery comprising a rectangular exterior housing can, a coin-shaped battery comprising a coin-shaped exterior housing can, or may be a pouch battery comprising an exterior composed of a laminate sheet including metal layers and resin layers.

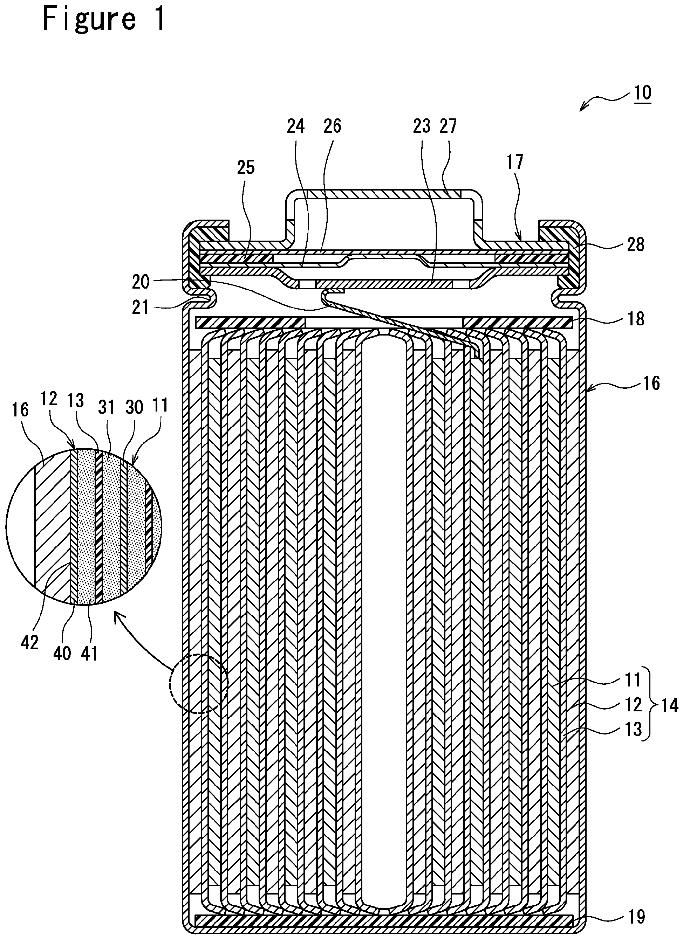

FIG. 1 is a view schematically illustrating a cross section of a secondary battery 10 of an example of an embodiment. In FIG. 1, illustration of a tape 50, described later, is omitted. As illustrated in FIG. 1, the secondary battery 10 comprises the electrode assembly 14, an electrolyte (not illustrated), and the exterior housing can 16 housing the electrode assembly 14 and the electrolyte. The electrode assembly 14 has a positive electrode 11, a negative electrode 12, and a separator 13, and has a structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is capped with a sealing assembly 17. Hereinafter, for convenience of description, a side of the sealing assembly 17 of the secondary battery 10 will be described as "upper side", and a bottom side of the exterior housing can 16 will be described as "lower side".

Although the electrolyte may be an aqueous electrolyte, a non-aqueous electrode is used in the present embodiment. The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. An example of the non-aqueous solvent includes ethylene carbonate (EC), ethyl methyl carbonate (EMC), dimethyl carbonate (DMC), diethyl carbonate (DEC), and a mixed solvent thereof. The non-aqueous solvent may contain a halogen-substituted derivative in which hydrogens in these solvents are at least partially substituted with halogen atoms such as fluorine (for example, fluoroethylene carbonate (FEC), and the like). For the electrolyte salt, a lithium salt such as LiPF₆ is used, for example.

All of the positive electrode 11, the negative electrode 12, and the separator 13 that constitute the electrode assembly 14 have an elongated band-shape, and are spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two of the separator 13 are formed to be one size larger than at least the positive electrode 11, and arranged to sandwich the positive electrode 11. The secondary battery 10 comprises insulating plates 18 and 19 respectively arranged on the upper and lower sides of the electrode assembly 14.

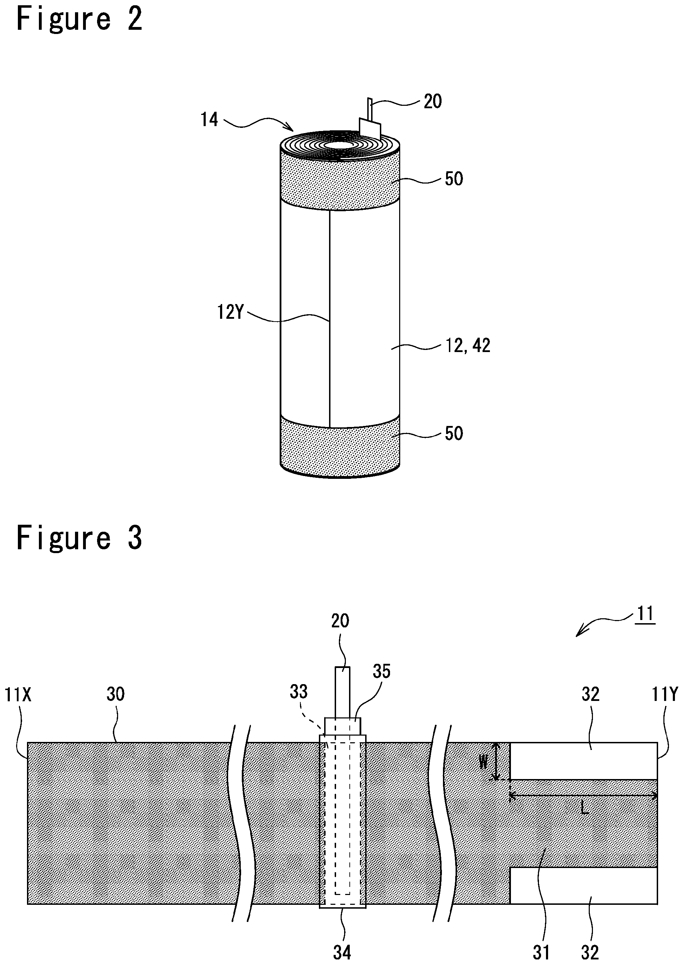

The positive electrode 11 has a positive electrode core 30 and a positive electrode mixture layer 31 formed on the positive electrode core 30. For the positive electrode core 30, a foil of a metal stable within a potential range of the positive electrode 11, such as aluminum and an aluminum alloy, a film in which such a metal is arranged on a surface layer, and the like may be used. The positive electrode mixture layer 31 includes a positive electrode active material, a conductive agent, and a binder, and is preferably formed on both surfaces of the positive electrode core 30 except for an exposed portion 32 and an exposed portion 33 to which a positive electrode lead 20 is to be welded, described later (see FIG. 3). The positive electrode 11 may be produced by, for example, applying a positive electrode mixture slurry including the positive electrode active material, the conductive agent, the binder, and the like on the positive electrode core 30, and drying and then compressing the coating film to form the positive electrode mixture layer 31 on both surfaces of the positive electrode core 30.

The positive electrode mixture layer 31 includes lithium-metal composite oxide particles as the positive electrode active material. The lithium-metal composite oxide is a composite oxide containing metal elements such as Co, Mn, Ni, and Al in addition to Li. The metal elements constituting the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from the group consisting of Co, Ni, and Mn is preferably contained. A preferable example of the composite oxide includes: a lithium-metal composite oxide containing Ni, Co, and Mn; and a lithium-metal composite oxide containing Ni, Co, and Al.

Examples of the conductive agent included in the positive electrode mixture layer 31 may include carbon materials such as carbon black such as acetylene black and Ketjenblack, graphite, carbon nanotube (CNT), carbon nanofiber, and graphene. Examples of the binder included in the positive electrode mixture layer 31 may include fluorine-containing resins such as polytetrafluoroethylene (PTFE) and polyvinylidene fluoride (PVDF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

The negative electrode 12 has a negative electrode core 40 and a negative electrode mixture layer 41 formed on the negative electrode core 40. For the negative electrode core 40, a foil of a metal stable within a potential range of the negative electrode 12, such as copper and a copper alloy, a film in which such a metal is arranged on a surface layer, and the like may be used. The negative electrode mixture layer 41 includes a negative electrode active material, a binder, and as necessary a conductive agent, and is preferably formed on both surfaces of the negative electrode core 40 except for an exposed portion 42, described later. The negative electrode 12 may be produced by applying a negative electrode mixture slurry including the negative electrode active material, the binder, and the like on a surface of the negative electrode core 40, and drying and then compressing the coating film to form the negative electrode mixture layer 41 on both surfaces of the negative electrode core 40.

The negative electrode mixture layer 41 typically includes a carbon material that reversibly occludes and releases lithium ions, as the negative electrode active material. A preferable example of the carbon material is graphite such as: natural graphite such as flake graphite, massive graphite, and amorphous graphite; and artificial graphite such as massive artificial graphite (MAG) and graphitized mesophase-carbon microbead (MCMB). As the negative electrode active material, a material including at least one of an element that forms an alloy with Li, such as Si and Sn, and a material containing such an element may be used. Among these, a composite material containing Si is preferable.

A preferable example of the composite material containing Si includes a material in which Si fine particles are dispersed in a SiO₂ phase or a silicate phase such as lithium silicate, or a material in which Si fine particles are dispersed in an amorphous carbon phase. On particle surfaces of the composite material, a conductive layer such as a carbon coating is formed, for example. Use in combination of the carbon material and the Si-containing composite material as the negative electrode active material is preferable from the viewpoint of achievement of both high capacity and high durability of the battery.

For the binder included in the negative electrode mixture layer 41, a fluorine-containing resin, PAN, a polyimide, an acrylic resin, a polyolefin, and the like may be used as in the case of the positive electrode mixture layer 31, but styrene-butadiene rubber (SBR) is preferably used. The negative electrode mixture layer 41 preferably includes CMC or a salt thereof, polyacrylic acid (PAA) or a salt thereof, polyvinyl alcohol (PVA), and the like. Among these, SBR; and CMC or a salt thereof, or PAA or a salt thereof are preferably used in combination. The negative electrode mixture layer 41 may include a conductive agent such as CNT.

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene or polypropylene, cellulose, or the like is preferable. The separator 13 may have a single-layer structure or a multi-layer structure. On a surface of the separator 13, a resin layer having high heat resistance, such as an aramid resin, may be formed. On an interface between the separator 13 and at least one of the positive electrode 11 and the negative electrode 12, a filler layer including an inorganic filler may be formed.

On the outer circumferential surface of the positive electrode assembly 14, the negative electrode 12 is arranged. The electrode assembly 14 has the positive electrode lead 20 connected to the positive electrode core 30 by welding or the like. Although a negative electrode lead is not provided in the example illustrated in FIG. 1, an exposed portion of the negative electrode core may be provided on an inner circumferential side of the electrode assembly 14, and the negative electrode lead may be connected to this exposed portion, as the battery of Example described later.

On the outer circumferential surface of the electrode assembly 14, an exposed portion 42 where a surface of the negative electrode core 40 is exposed is formed. The exposed portion 42 may be formed on a part of the outer circumferential surface of the electrode assembly 14, but preferably formed on the entire region of the outer circumferential surface. The exposed portion 42 may be formed on only one side of the negative electrode core 40 facing an outside of the electrode assembly 14 (outer surface), or may be formed on both surfaces of the negative electrode core 40. The exposed portion 42 is formed within, for example, a range having a length of about greater than or equal to one round and less than or equal to two rounds of the circumferential length of the electrode assembly 14 from a winding-finish end 12Y (see FIG. 2 described later), which is one end in a length direction of the negative electrode core 40 (negative electrode 12) positioned on the outer circumferential surface of the electrode assembly 14.

In the secondary battery 10, the exposed portion 42 of the negative electrode 12 contacts with an inner surface of the exterior housing can 16 to electrically connect the negative electrode 12 and the exterior housing can 16. The exposed portion 42 contacts with the inner surface of the exterior housing can 16 over the entire circumference of the outer circumferential surface of the electrode assembly 14, for example. The positive electrode lead 20 extends through a through hole of the insulating plate 18 toward the side of the sealing assembly 17, and connected to the lower surface of an internal terminal plate 23, which is a bottom plate of the sealing assembly 17, by welded or the like. In the present embodiment, the sealing assembly 17 becomes a positive electrode external terminal, and the exterior housing can 16 becomes a negative electrode external terminal.

As noted above, the exterior housing can 16 is a bottomed cylindrical metallic container having an opening on one side in the axial direction. A gasket 28 is provided between the exterior housing can 16 and the sealing assembly 17 to achieve sealability inside the battery and insulability between the exterior housing can 16 and the sealing assembly 17. On the exterior housing can 16, a grooved portion 21 in which a part of a side wall thereof projects inward to support the sealing assembly 17 is formed. The grooved portion 21 is preferably formed in a circular shape along the circumferential direction of the exterior housing can 16, and supports the sealing assembly 17 with the upper surface thereof. The sealing assembly 17 is fixed onto the upper part of the exterior housing can 16 with the grooved portion 21 and with an end of the opening of the exterior housing can 16 calked with the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at respective central parts thereof, and the insulating member 25 is interposed between the respective circumferential parts thereof. If the battery causes abnormality to increase the internal pressure, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

Hereinafter, the electrode assembly 14, specifically the positive electrode 11 and a tape 50, will be described in detail with reference to FIG. 2 and FIG. 3.

FIG. 2 is a schematic view of the electrode assembly 14. As illustrated in FIG. 2, the tape 50 is attached to the outer circumferential surface of the electrode assembly 14. The tape 50 is a winding-stop tape that fixes the winding-finish end 12Y to retain the wound structure of the electrode assembly 14. As noted above, the outer circumferential surface of the electrode assembly 14 is formed with the exposed portion 42 of the negative electrode 12 in the present embodiment. The tape 50 is attached across the winding-finish end 12Y, which is an end in the length direction of the negative electrode 12 in the exposed portion 42, and fixes the winding-finish end 12Y onto the outer circumferential surface of the electrode assembly 14.

The tape 50 is formed in a narrow band shape. The tape 50 may be attached so that the length direction thereof is along the axial direction of the electrode assembly 14, but is preferably attached so that the length direction is along the circumferential direction. The tape 50 crosses the winding-finish end 12Y along the circumferential direction of the electrode assembly 14, and is attached within a length range of greater than or equal to 50%, preferably greater than or equal to 60% and less than or equal to 90%, of the circumferential length of the outer circumferential surface. The tape 50 is preferably attached to both ends in the axial direction of the electrode assembly 14. In this case, for example, it is inhibited that the end in the axial direction of the electrode assembly 14 contacts with the edge of the exterior housing can 16 to turn up, and housing of the electrode assembly 14 into the exterior housing can 16 becomes smoother.

The tape 50 preferably has a width corresponding to greater than or equal to 5% and less than or equal to 25% of the length in the axial direction of the electrode assembly 14. The tape 50 typically has a constant width over the entire length. The tape 50 is attached only within a range of less than or equal to 25% of the width of the negative electrode 12 (length in the upper-lower direction) from both the upper and lower ends of the exposed portion 42 (negative electrode 12), for example. Although the tape 50 may be attached with a predetermined gap with both the upper and lower ends of the exposed portion 42 with considering an attachment error, the gap between the tape 50 and both the upper and lower ends of the exposed portion 42 is, for example, set to less than or equal to 1 mm.

The tape 50 has a substrate constituted with an insulative resin and an adhesive layer formed on one side of the substrate. The tape 50 is preferably an insulative tape having substantially no conductivity. The tape 50 may have a layered structure of greater than or equal to three layers, and may be constituted with a substrate being greater than or equal to two types of same or different laminated film. The tape 50 may contain an inorganic filler such as titania, alumina, silica, and zirconia, and a layer containing the inorganic filler may be provided in addition to the substrate and the adhesive layer.

Examples of the resin to constitute the substrate of the tape 50 may include a polyester such as polyethylene terephthalate (PET), polypropylene (PP), a polyimide (PI), polyphenylene sulfide (PPS), a polyether imide (PEI), and a polyamide. The adhesive layer is formed by, for example, applying an adhesive on the one side of the substrate. The adhesive to constitute the adhesive layer may be hot-melt-type adhesive to exhibit adhesiveness by heating or a thermally curable adhesive to be cured by heating, and preferably has adhesiveness at room temperature from the viewpoints of productivity and the like. Examples of the adhesive to constitute the adhesive layer may include an acrylic adhesive and a synthetic rubber adhesive.

A thickness of the tape 50 is, for example, greater than or equal to 20 µm and less than or equal to 100 µm, and preferably greater than or equal to 30 µm and less than or equal to 70 µm. A thickness of the positive electrode mixture layer 31 on one surface side of the positive electrode core 30 is preferably greater than or equal to the thickness of the tape 50 (the thickness of the positive electrode mixture layer 31 ≥ the thickness of the tape 50), and more preferably greater than the thickness of the tape 50. In this case, an effect by an exposed portion 32 described later becomes more remarkable. The thickness of the positive electrode mixture layer 31 on one surface side of the positive electrode core 30 is, for example, greater than or equal to 50 µm and less than or equal to 130 µm, and preferably greater than or equal to 60 µm and less than or equal to 110 µm.

FIG. 3 is a front view of an unwound state of the positive electrode 11, and illustrates a surface (outer winding surface) of the positive electrode 11 facing the outside in the radial direction of the electrode assembly 14. As illustrated in FIG. 3, the positive electrode mixture layer 31 is absent at a center portion in the length direction of the positive electrode 11, and an exposed portion 33 where the surface of the positive electrode core 30 is exposed is formed. The exposed portion 33 is a portion to which the positive electrode lead 20 is to be welded, and formed with a constant width over the entire length in the width direction of the positive electrode 11. In the example illustrated in FIG. 3, protective tapes 34 and 35 are attached to the center portion in the length direction of the positive electrode 11 so as to cover the exposed portion 33 and the positive electrode lead 20. For the protective tapes 34 and 35, a tape similar to the winding-stop tape 50 may be used.

A mass of the positive electrode active material per unit area of a first region overlapped with at least the tape 50 in a radial direction of the electrode assembly 14 in the outer winding surface of the outermost circumference of the positive electrode 11 is smaller than a mass of the positive electrode active material per unit area of a second region where the positive electrode mixture layer 31 is present, the second region excluding the first region in the outer winding surface. In the conventional secondary batteries, the positive electrode mixture layer is uniformly formed on the entire region of the positive electrode 11 (see Example 3 described later). In contrast, in the secondary battery 10, there is a region where a mass of the positive electrode active material per unit area is reduced on at least a part of the outer winding surface of the outermost circumference of the positive electrode 11.

In the first region of the positive electrode 11, reduction in the amount of the positive electrode active material present per unit area reduces change in volume of this area due to charge and discharge, resulting in relaxation of stress that acts at the edge of the tape 50. As a result, it is considered that damage of the electrode assembly 14 is effectively inhibited. As a result of investigation by the present inventors, it has been found that reduction in the amount of the positive electrode active material per unit area in a region other than the outer winding surface of the outermost circumference of the positive electrode 11 yields small or little effect of inhibiting damage of the electrode assembly 14.

In the outer winding surface of the outermost circumference of the positive electrode 11, the region with a reduced mass of the positive electrode active material per unit area may be formed by, for example, reducing the thickness of the positive electrode mixture layer 31 compared with the above second region, but preferably the region is the exposed portion 32 where the surface of the positive electrode core 30 is exposed. That is, the exposed portion 32 where the positive electrode mixture layer 31 is absent is formed in the first region of the positive electrode 11. The second region is a region except for the first region in the outer winding surface of the outermost circumference of the positive electrode 11, and a region where the positive electrode mixture layer 31 is formed. In the present embodiment, the second region is a region except for the exposed portion 33. A mass of the positive electrode active material per unit volume is substantially uniform in the second region.

The exposed portion 32 is a region where the positive electrode active material is substantially absent, and formed by, for example, not applying the positive electrode mixture slurry on the positive electrode core 30 or by peeling a part of the positive electrode mixture layer 31 from the positive electrode core 30. The exposed portion 32 may be formed on the entire region in the outer circumferential surface of the positive electrode 11, but preferably formed only on the first region overlapped with the tape 50 in the radial direction of the electrode assembly 14 and a proximity thereof from the viewpoint of increase in capacity. With considering position shift between the exposed portion 32 and the tape 50, the exposed portion 32 is formed within a region rather wider than the first region.

In the positive electrode 11, one end in the length direction is positioned on a side of the core of the electrode assembly 14 to be a winding-start end 11X, and the other end in the length direction is positioned on a side of the outer circumferential surface of the electrode assembly 14 to be a winding-finish end 11Y. Thus, a predetermined length range from the other end in the length direction of the positive electrode 11 becomes the outermost circumference of the positive electrode 11 in the electrode assembly 14, and a part of the outer winding surface is overlapped with the tape 50 in the radial direction of the electrode assembly 14 to form the first region. In the present embodiment, the tape 50 is attached to both ends in the axial direction of the electrode assembly 14, and thereby both ends in the width direction of the positive electrode 11 are the first region, and the exposed portion 32 is formed in at least this region.

On the outer winding surface of the outermost circumference of the positive electrode 11, the exposed portion 32 is formed so as to sandwich the positive electrode mixture layer 31 in the axial direction of the electrode assembly 14. In other words, within the predetermined length range from the winding-finish end 11Y of the positive electrode 11, the exposed portion 32, the positive electrode mixture layer 31, and the exposed portion 32 are formed in this order along the width direction of the positive electrode 11. Each of the exposed portions 32 has a size same as each other in a front-viewed shape, for example. Since the region sandwiched by the exposed portions 32 is a region not overlapped with the tape 50, decrease in the capacity may be reduced to necessary minimum by providing the positive electrode mixture layer 31 in this region.

In the outer winding surface of the outermost circumference of the positive electrode 11, the exposed portion 32 is preferably formed continuously from the winding-finish end 11Y toward the side of the winding-start end 11X. A length L of the exposed portion 32 along the length direction of the positive electrode 11 is preferably longer than the length of the tape 50, and may be a length greater than the circumferential length of the outer circumferential surface of the positive electrode 11. The length L of the exposed portion 32 is, although slightly varying depending on the length the tape 50, a length corresponding to, for example, greater than or equal to 90% and less than or equal to 110% of the circumferential length of the outer circumferential surface of the positive electrode 11. In this case, damage of the electrode assembly 14 may be efficiently inhibited while keeping high capacity.

A width W of the exposed portion 32 is preferably longer than the width of the tape 50. The width W of the exposed portion 32 is set to, for example, a length corresponding to greater than or equal to 105% and less than or equal to 120% of the width of the tape 50 with considering position shift between the positive electrode 11 and the tape 50. By forming the exposed portion 32 within the necessary minimum region, damage of the electrode assembly 14 may be efficiently inhibited while keeping high capacity. The width W of the exposed portion 32 is constant over the entire length of the exposed portion 32, and the exposed portion 32 has a front-viewed rectangular shape.

### EXAMPLES

Hereinafter, the present disclosure will be further described with Examples, but the present disclosure is not limited to these Examples.

### <Example 1>

### [Production of Positive Electrode]

As a positive electrode active material, a lithium-metal composite oxide represented by LiNi_{0.88}Co_{0.09}Al_{0.03}O₂ was used. The positive electrode active material, acetylene black, and polyvinylidene fluoride were mixed at a solid-content mass ratio of 100:1:0.9, and N-methyl-2-pyrrolidone (NMP) was used as a dispersion medium to prepare a positive electrode mixture slurry. Then, this positive electrode mixture slurry was applied on both surfaces of a positive electrode core composed of aluminum foil with 15 µm in thickness with leaving a welding portion for a positive electrode lead, the coating film was dried and compressed, and then cut to a predetermined electrode size to produce a positive electrode (thickness: 0.144 mm, width: 62.6 mm, length: 703 mm) in which a positive electrode mixture layer was formed on both surfaces of the positive electrode core. An exposed portion to be the welding portion for the positive electrode lead was provided at a center portion in the length direction of the positive electrode, and the positive electrode lead was welded to this exposed portion.

Then, the positive electrode mixture layer within a predetermined range from one end in the length direction of the positive electrode was peeled on one side of the positive electrode to form an exposed portion A where the surface of the positive electrode core was exposed. The exposed portion A was formed in a front-viewed rectangular shape with 64 mm in length and 10 mm in width on both ends in the width direction of the positive electrode.

### [Production of Negative Electrode]

As a negative electrode active material, a mixed powder of 95 parts by mass of graphite powder and 5 parts by mass of a Si-containing composite material (composite material in which Si fine particles were dispersed in a SiO₂ phase) was used. The negative electrode active material, a sodium salt of carboxymethylcellulose (CMC-Na), and a dispersion of styrene-butadiene rubber (SBR) were mixed at a solid-content mass ratio of 100: 1: 1, and water was used as a dispersion medium to prepare a negative electrode mixture slurry. Then, this negative electrode mixture slurry was applied on both surfaces of a negative electrode core composed of copper foil with 8 µm in thickness, the coating film was dried and compressed, and then cut to a predetermined electrode size to produce a negative electrode (thickness: 0.192 mm, width: 64 mm, length: 816 mm) in which a negative electrode mixture layer was formed on both surfaces of the negative electrode core.

An exposed portion to be a welding portion for a negative electrode lead was provided on one end in the length direction of the negative electrode, and the negative electrode lead was welded to this exposed portion. On one surface of the negative electrode, formed was an exposed portion B where the surface of the negative electrode core was exposed with a length of about 1.5 rounds of a circumferential length of an electrode assembly from the other end in the length direction of the negative electrode.

### [Preparation of Non-Aqueous Electrolyte Liquid]

Into a mixed solvent in which ethylene carbonate (EC) and dimethyl carbonate (DMC) were mixed at a volume ratio (25°C) of 1:3, vinylene carbonate was added so that the concentration was 5 mass%, and LiPF₆ was added so that the concentration was 1.5 M to prepare a non-aqueous electrolyte liquid.

### [Production of Battery]

The above positive electrode and the above negative electrode were spirally wound via a separator made of polyethylene to produce a wound electrode assembly. At this time, the positive electrode and the negative electrode were wound via the separator so that the exposed portion A of the positive electrode faced the outside in the radial direction of the electrode assembly to be positioned on the outermost circumference of the positive electrode, and so that the exposed portion B of the negative electrode faced the outside in the radial direction of the electrode assembly to form the outer circumferential surface of the electrode assembly. Then, a winding-stop tape (length: 60 mm, width: 9 mm) that fixes the winding-finish end to retain the wound structure was attached to both ends in the axial direction of the outer circumferential surface of the electrode assembly. Note that the exposed portion A of the positive electrode was arranged at a position overlapped with the tape in the radial direction of the electrode assembly, and the positive electrode mixture layer was absent within the range overlapped with the tape in the outer circumferential surface of the positive electrode.

Then, insulating plates were respectively arranged on the upper and lower sides of the electrode assembly, then the negative electrode lead was welded to a bottom inner surface of an exterior housing can, the positive electrode lead was welded to an internal terminal plate of a sealing assembly, and the electrode assembly was housed in the exterior housing can. Thereafter, the non-aqueous electrolyte liquid was injected into the exterior housing can with a pressure-reducing method, and an opening of the exterior housing can was sealed with the sealing assembly via a gasket to produce a cylindrical non-aqueous electrolyte secondary battery having a battery capacity of 4600 mAh. The exposed portion B of the negative electrode formed a state of contacting with an inner circumferential surface of the exterior housing can.

### <Example 2>

A cylindrical non-aqueous electrolyte secondary battery was produced in the same manner as in Example 1 except that the width of the exposed portion A of the positive electrode was changed to 5 mm. **In** this case, a part of the positive electrode mixture layer formed on the outer circumferential surface of the positive electrode was overlapped with the winding-stop tape in the radial direction of the electrode assembly.

### <Example 3>

A cylindrical non-aqueous electrolyte secondary battery was produced in the same manner as in Example 1 except that the exposed portion A of the positive electrode was not formed.

### [Cycle Test]

Under a temperature environment of 25°C, the secondary battery of each of Examples was charged at a constant current of 1380 mA (0.3 It) until a battery voltage reached 4.2 V, and then charged at a constant voltage of 4.2 V until a terminal current reached 92 mA (0.02 It). After a rest for 20 minutes, the battery was discharged at a constant current of 2300 mA (0.5 It) until the battery voltage reached 2.75 V. This charge and discharge was repeated 100 times.

The battery subjected to the charge and discharge 100 times was disassembled, and presence or absence of wrinkles of the negative electrode core on the outer circumferential surface of the electrode assembly was observed.

**[Table 1]**

| | Width of exposed portion A | Overlap between mixture layer on outer winding surface of outermost circumference of positive electrode and winding-stop tape | Wrinkles on negative electrode |
|---|---|---|---|
| Example 1 | 10mm | Absent | Absent |
| Example 2 | 5mm | Present | Present |
| Example 3 | - | Present | Present |

As shown in Table 1, no wrinkles of the negative electrode core on the outer circumferential surface of the electrode assembly were observed in the battery of Example 1 in which the wide exposed portion A was provided on the outer circumferential surface of the positive electrode so that the positive electrode mixture layer and the winding-stop tape were not overlapped in the radial direction of the electrode assembly. Meanwhile, wrinkles on the negative electrode core were observed in the batteries of Examples 2 and 3 in which the positive electrode mixture layer on the outer circumferential surface of the positive electrode and the winding-stop tape were overlapped in the radial direction of the electrode assembly.

It was considered that, in the batteries of Examples 2 and 3, stress concentrated at the edge during charge and discharge by an effect of a step formed on the edge of the tape to generate the wrinkles on the negative electrode core. In contrast, the battery of Example 1 was considered to relax the effect by the step to disperse the stress, and consequently inhibited the wrinkles on the negative electrode core.

### REFERENCE SIGNS LIST

10 Secondary battery, 11 Positive electrode, 11X Winding-start end, 11Y, 12Y Winding-finish end, 12 Negative electrode, 13 Separator, 14 Electrode assembly, 16 Exterior housing can, 17 Sealing assembly, 18, 19 Insulating plate, 20 Positive electrode lead, 21 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 32, 33, 42 Exposed portion, 34, 35 Protective tape, 40 Negative electrode core, 41 Negative electrode mixture layer, 50 Tape

## Claims

1. A secondary battery, comprising an electrode assembly including a positive electrode, a negative electrode, and a separator, in which the positive electrode and the negative electrode are wound via the separator, wherein
a tape that fixes a winding-finish end is attached to an outer circumferential surface of the electrode assembly,
the positive electrode has a positive electrode core and a positive electrode mixture layer including a positive electrode active material and formed on the positive electrode core, and
a mass of the positive electrode active material per unit area of a first region overlapped with at least the tape in a radial direction of the electrode assembly in an outer winding surface of an outermost circumference of the positive electrode is smaller than a mass of the positive electrode active material per unit area of a second region where the positive electrode mixture layer is present, the second region excluding the first region in the outer winding surface.

2. The secondary battery according to claim 1, wherein an exposed portion where a surface of the positive electrode core is exposed is formed in the first region.

3. The secondary battery according to claim 2, wherein the tape is attached to both ends in an axial direction of the electrode assembly.

4. The secondary battery according to any one of claims 1 to 3, wherein a thickness of the tape is less than or equal to a thickness of the positive electrode mixture layer in the second region.
